# EUROPEAN PATENT SPECIFICATION

(11) **EP 4 519 034 B1**
(45) Date of publication and mention of the grant of the patent: **09.09.2026**
(21) Application number: 23724517.0
(22) Date of filing: 21.04.2023
(51) Int. Cl.: B21C 47/06, B21C 51/00, G01J 5/00, B21C 47/26, B65H 18/26, B21B 38/00

(54) **IRONING ROLL THERMAL IMAGE MONITORING AND CONTROL**
THERMISCHE BILDÜBERWACHUNG UND -STEUERUNG EINER DRUCKROLLE
SURVEILLANCE D'IMAGE THERMIQUE ET COMMANDE D'UN GALET DE PRESSION

(30) Priority: 03.05.2022 US 202263364057 P
(43) Date of publication of application: 12.03.2025
(73) Proprietor: Novelis Inc., Atlanta, GA 30326 (US)
(72) Inventor: PORTO, Luiz Augusto Leal, Kennesaw, Georgia 30144 (US); MORAES, Tiago Sanini, Kennesaw, Georgia 30144 (US); EBOLI, Carlos Alberto Jorio, Kennesaw, Georgia 30144 (US); ALVES, Ademir, Kennesaw, Georgia 30144 (US); LACHNITT, Simon, Kennesaw, Georgia 30144 (US)
(74) Representative: Weickmann & Weickmann PartmbB
(86) International application number: PCT/US2023/019426
(87) International publication number: WO 2023/215122

(56) References cited:
- EP-A1- 3 426 418
- WO-A1-2012/096089
- JP-A- S60 210 320
- KR-B1- 100 952 795
- US-A- 4 498 383
- US-A1- 2010 236 310

## Description

### REFERENCE TO RELATED APPLICATION

### FIELD OF THE INVENTION

This application relates to metalworking generally, and more specifically to systems and methods for controlling an ironing roll of a metal processing system.

### BACKGROUND

A metal product may be rolled into a strip of metal during a rolling operation, and the strip of metal may be wound into a coil. During coiling of the metal strip, an ironing roll may be used to force the metal strip against the coil to help ensure that the coil is tightly wound and to minimize or prevent damage at the surface of the metal strip. Any instance of using an incorrect force (e.g., due to misalignment of the ironing roll, an unbalanced ironing roll, etc.) can result in a scratch or scar to a surface of the metal strip. Moreover, failure of the ironing roll itself is another major cause of scratching and gouging of the surface of the metal strip. In particular, a rubber coating of the ironing roll commonly bursts and otherwise fails during metal processing, sometimes unexpectedly, and such failure often forms a scratch or gouge in the surface of the metal strip. Such damage to the metal strip requires scrapping of the damaged portion of the coil or even the entire coil.

Document WO 2012/096089 A1 discloses a metal processing system comprising a work station comprising a coiler configured for selectively forming a coil of a metal substrate, and forms the basis for the preamble of claim 1.

### SUMMARY

Embodiments covered by this patent are defined by the claims below, not this summary. This summary is a high-level overview of various embodiments and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings, and each claim.

According to a first embodiment, a metal processing system includes the features of claim 1.

According to an example not forming part of the claimed invention, a control system for a metal processing system having a roll with a non-metal contact surface includes a sensor for detecting a temperature of the non-metal contact surface of the roll, and a controller communicatively coupled with the sensor. The controller may receive the detected temperature from the sensor and generate an output signal for controlling the roll based on the received temperature.

According to a second embodiment, a method of controlling a roll with a non-metal contact surface for contacting a metal substrate includes the features of claim 10.

Various implementations described herein may include additional systems, methods, features, and advantages, which cannot necessarily be expressly disclosed herein but will be apparent to one of ordinary skill in the art upon examination of the following detailed description and accompanying drawings. It is intended that all such systems, methods, features, and advantages be included within the present disclosure and protected by the accompanying claims.

### BRIEF DESCRIPTION OF THE DRAWINGS

The specification makes reference to the following appended figures, in which use of like reference numerals in different figures is intended to illustrate like or analogous components.
FIG. 1 illustrates a metal processing system with an ironing roll and a control system according to embodiments, and with the ironing roll in a first position relative to a sensor of the control system.
FIG. 2 illustrates an ironing roll of FIG. 1.
FIG. 3 illustrates the metal processing system of FIG. 1 with the ironing roll in a second position relative to the sensor.
FIG. 4 illustrates the ironing roll from the control system of FIG. 1 with detection zones according to embodiments.
FIG. 5 is a top view of the sensor of the control system and the ironing roll of FIG. 1 with the ironing roll in the first position and the second position.
FIG. 6 illustrates the ironing roll of FIG. 1 in the first position and the second position relative to the sensor of the control system.
FIG. 7 illustrates a metal processing system with an ironing roll and a control system according to embodiments.
FIG. 8 illustrates a temperature profile of another ironing roll according to embodiments.
FIG. 9 illustrates a temperature profile of an ironing roll before and after control of the ironing roll with a control system according to embodiments.

### DETAILED DESCRIPTION

Described herein are systems and methods for controlling a roll of a metal processing system and with a non-metal surface. The roll is an ironing roll for contacting a surface of a metal substrate in a coil. In certain embodiments, the systems and methods provided herein include a control system that measures and detects a temperature of the non-metal surface of the roll and controls an operating parameter of the roll based on the detected temperature. In certain embodiments, the control system measures the temperature in a plurality of zones across a width of the roll, which may allow for the detection of differences in the temperature of the roll, which may differ from one side to the other, and allow for correction as needed.

In some embodiments, the control system may amplify and/or otherwise control a size of the zones based on a distance between a sensor of the control system and the roll, which may improve measurement and/or control based on such temperature measurements by maintaining a proportion of the roll measured for a particular zone (i.e., the size of the measured area relative to the overall roll remains proportional regardless of the distance between the sensor and the roll). In certain embodiments, the systems and methods provided herein may prevent and/or minimize failure of an ironing roll during metal processing, thereby minimizing and/or preventing defects or damage in a metal substrate (e.g., scratch gouges) due to failure of the ironing roll. In some embodiments, the systems and methods provided herein may be used to predict failure or a usable life of an ironing roll such that the ironing roll can be replaced as needed before failure of the ironing roll. In various embodiments, the systems and methods provided herein may provide improved flatness control with using an ironing roll. Various other benefits and advantages may be realized with the systems and methods provided herein, and the aforementioned advantages should not be considered limiting.

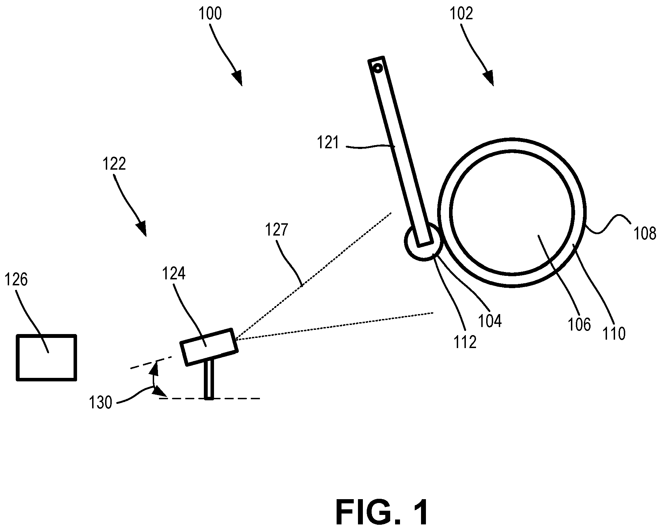

FIGS. 1-6 illustrate a metal processing system 100 with a work station 102 that includes at least one roll 104. In the embodiment of FIGS. 1-6, the work station 102 is a coiling station that includes a coiler 106 for selectively forming a coil 108 of a metal substrate 110 or uncoiling the coil 108. The roll 104 in this embodiment is an ironing roll for contacting the coil 108 to promote good coiling and buildup of the coil 108 and/or uncoiling of the metal substrate 110 from the coil 108.

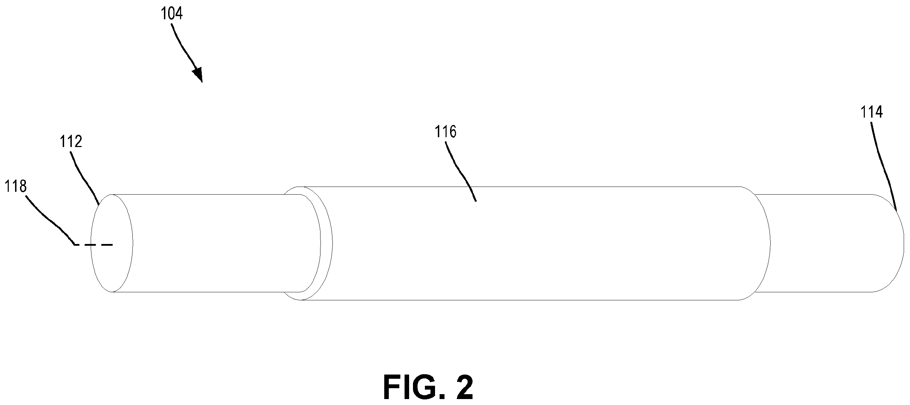

Referring to FIG. 2, according to the invention, the roll 104 includes a first end 112, a second end 114, and a contact surface 116 between the first end 112 and the second end 114. The contact surface 116 is a non-metal surface suitable for contacting the metal substrate 110 during processing of the metal substrate 110 (e.g., coiling or uncoiling in FIGS. 1-6) as the roll 104 rotates about its axis 118. In one non-limiting example, the contact surface 116 is a rubber coating provided on the roll 104 between the ends 112, 114. According to the invention, the non-metal surface is deformable during metal processing. The contact surface 116 may be provided on the roll 104 using various techniques or processes as desired. The particular roll 104 with the contact surface 116 illustrated in FIGS. 1-6 should not be considered limiting.

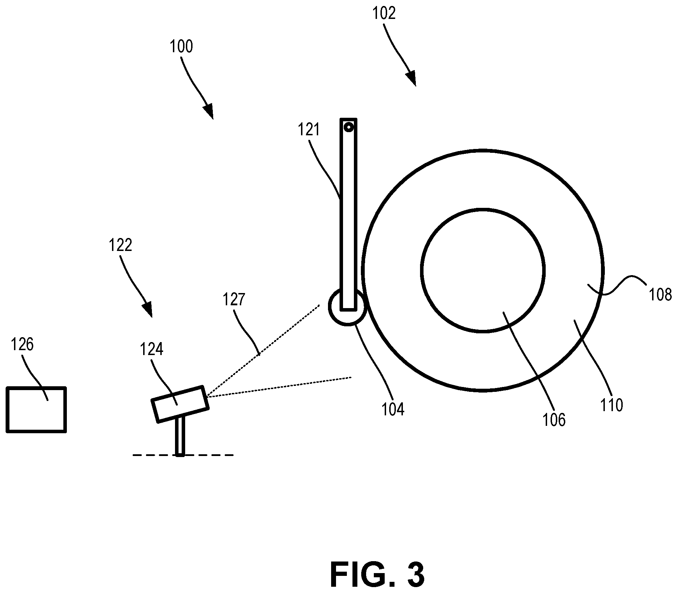

Referring to FIGS. 1 and 3, during metal processing, the roll 104 may be supported on a support 121 such that at least the contact surface 116 contacts the coil 108. The particular support 121 illustrated should not be considered limiting, and various devices or structures as desired may be utilized as the support 121. In some embodiments, at least one of the ends 112, 114 of the roll 104 is driven via various suitable actuators or drive mechanisms such that the roll 104 maintains contact with the coil 108 as it rotates about its axis 118 (see FIG. 2).

As illustrated by comparing FIG. 1 with FIG. 3, the roll 104 is movable in a radial direction as the coil 108 changes size from a smaller (or initial) size (FIG. 1) and an end (or larger) size (FIG. 3). The contact between the contact surface 116 and the coil 108 may subject the contact surface 116 to thermal oscillation and variation, which in turn may eventually cause failure of the contact surface 116 and potential damage to the metal substrate 110. In addition, during metal processing, the actuators of the roll 104 may cause flatness issues in the metal substrate 110 due to wobbling movement, and such flatness issues may make the metal substrate 110 unsuitable for its intended purpose and/or require correction before further processing. As illustrated in FIGS. 1 and 3, for example, to minimize and/or prevent problems from the roll 104, the metal processing system 100 includes a control system 122 that measures a temperature of at least the contact surface 116 and generates an output response based on the measured temperature.

According to the invention, the control system 122 includes a sensor 124 and a controller 126. While a single sensor 124 and a single controller 126 are illustrated, in other embodiments the control system 122 may have any number of sensors 124 and/or controllers 126 as desired.

The sensor 124 of the control system 122 may be various suitable devices or mechanisms for detecting a temperature of at least the contact surface 116 of the roll 104. In certain embodiments, the sensor 124 is a thermal camera with a field of view 127. In various embodiments, the thermal camera may be a high frame rate thermal camera that obtains images at a rate greater than an operating frequency of the roll 104 to avoid or minimize an aliasing effect. As some non-limiting examples, the sensor 124 may obtain images at a frame rate of greater than 20 Hz, such as greater than 30 Hz, such as greater than 40 Hz, such as greater than 50 Hz, such as greater than 60 Hz. In some non-limiting examples, the thermal camera as the sensor 120 may have an acquisition rate of greater than 60 Hz, such as about 70 Hz. In other embodiments, cameras with other acquisition rates may be utilized as desired.

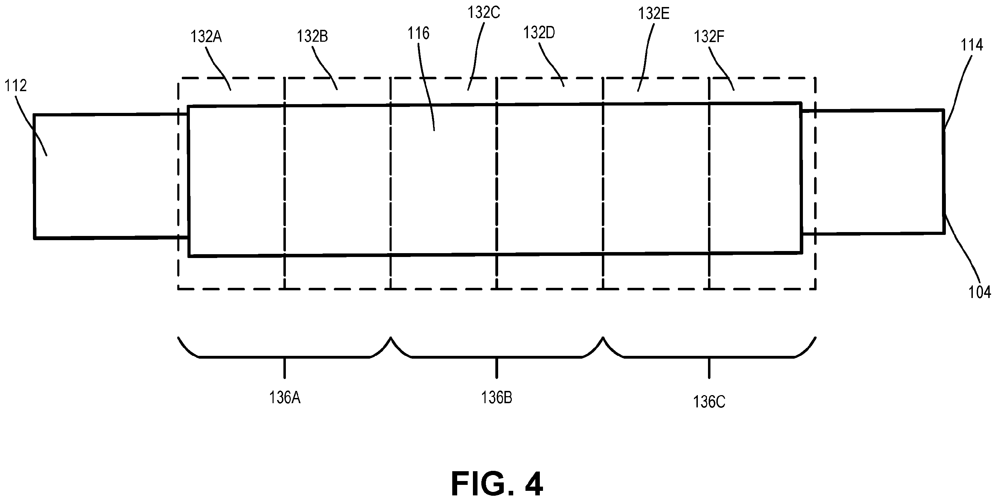

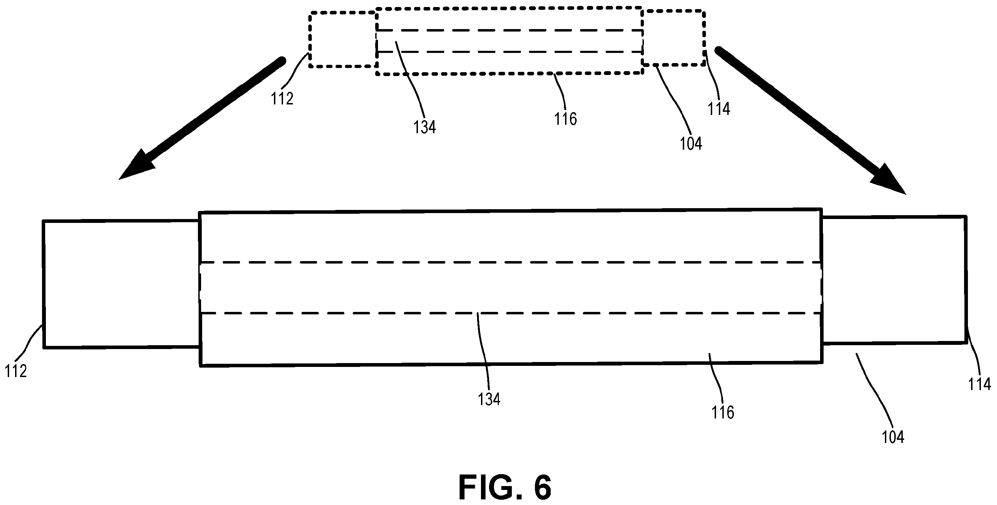

In various embodiments, and as illustrated in FIG. 4, the sensor 124 may detect a temperature of at least the contact surface 116 of the roll 104 using one or more detection zones 132 on the roll 104 between the ends 112, 114. In the embodiment illustrated in FIG. 4, the sensor 124 detects a temperature in six detection zones 132A-F; however, the number of detection zones 132 should not be considered limiting. In some non-limiting examples, the sensor 124 may use at least two detection zones, at least three detection zones, at least four detection zones, or at least five detection zones. In one non-limiting example, the sensor 124 may include at least ten detection zones, such as at least fifteen detection zones, such as at least twenty detection zones. In various embodiments, the sensor 124 independently detects the temperature in each detection zone. As an example, the sensor 124 detects the temperature of the contact surface 116 within detection zone 132A independently from the detection of the temperature of the contact surface 116 within detection zone 132B. In certain embodiments, and as discussed in detail below, the plurality of detection zones 132 may improve temperature measurement and control of the roll 104 using the control system 122. The particular size or area of each detection zone 132 relative to the roll 104 illustrated in FIG. 4 should not be considered limiting, and in other embodiments the detection zones 132 need not cover a complete width of the roll 104. FIG. 6 illustrates a non-limiting example where a detection area 134 (i.e., all of the detection zones 132) is less than the width of the roll 104.

In various embodiments, a plurality of detection zones 132 may together form a detection region 136. The number of detection zones 132 within a particular detection region 136 need not be the same along the roll 104. In the embodiment illustrated in FIG. 4, the roll 104 includes three detection regions 136 - a first detection region 136A formed by detection zones 132A-B; a second detection region 136B formed by detection zones 132C-D; and a third detection region 136C formed by detection zones 132E-F. The number of detection regions 136 should not be considered limiting. When included, the number of detection regions 136 may be less than or equal to the number of detection zones 132.

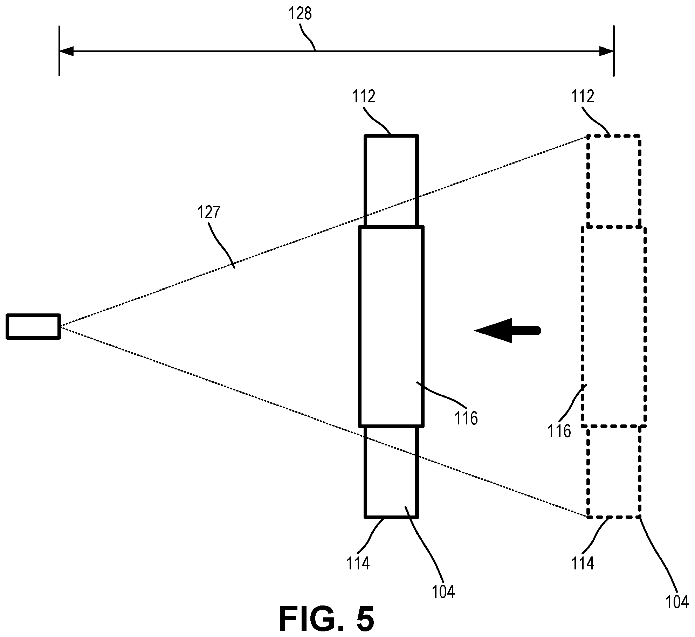

In certain embodiments, and as illustrated in FIG. 5, the sensor 124 is provided at a predetermined distance 128 from an initial position of the roll 104 (e.g., the position of the roll 104 in FIG. 1, and represented by the roll 104 in dashed lines in FIG. 5). At such a predetermined distance, at least the contact surface 116 may be within the field of view 127 in both the initial position and an end position (represented by the roll 104 in solid lines in FIG. 5).

Referring to FIG. 6, a detection area 134, which is the combined detection zones 132, may be controlled to maintain its size or area relative to the roll 104. In FIG. 6, the individual detection zones 132 are omitted for clarity of the figure. In these embodiments, the sensor 124 may automatically adjust its focus such that the detection area 134 is adjusted based on the position of the roll 104 relative to the sensor 124. Such automatic adjustment of the focus and detection area 134 may provide improved temperature measurements and control of the roll 104 using the control system 122. As a non-limiting example, in FIG. 6, the detection area 134 on the roll 104 in the initial position (represented by dashed lines) is smaller than the detection area 134 of the roll in the end position (represented by solid lines, and closer to the sensor 124), but the size of the detection area 134 relative to the roll 104 is the same in both the initial position and the end position.

Referring back to FIG. 1, the sensor 124 optionally may be provided at an angle 130 relative to the roll 104. In such embodiments, the sensor 124 may be provided below the roll 104 and the angle 130 optionally may be an oblique angle as illustrated in FIG. 1. In such embodiments, the angle 130 may further facilitate having at least the contact surface 116 within the field of view 127 as the roll 104 is moved in a radial direction. In other embodiments, the angle 130 of the sensor 124 may be any other angle as desired, and the sensor 124 need not be positioned below the roll 104 and/or at an oblique angle 130.

The controller 126 of the control system 122 may include one or more processing units and/or one or more memory devices. The processing unit of the controller may be various suitable processing devices or combinations of devices including but not limited to one or more application specific integrated circuits (ASICs), digital signal processors (DSPs), digital signal processing devices (DSPDs), programmable logic devices (PLDs), field programmable gate arrays (FPGAs), processors, controllers, micro-controllers, microprocessors, other electronic units, and/or a combination thereof. The one or more memory devices of the controller 126 may be any machine-readable medium that can be accessed by the processor, including but not limited to any type of long term, short term, volatile, nonvolatile, or other storage medium, and is not to be limited to any particular type of memory or number of memories, or type of media upon which memory is stored. Moreover, as disclosed herein, the term "storage medium", "storage" or "memory" can represent one or more memories for storing data, including read only memory (ROM), random access memory (RAM), magnetic RAM, core memory, magnetic disk storage mediums, optical storage mediums, flash memory devices and/or other machine readable mediums for storing information. The term "machine-readable medium" includes, but is not limited to, portable or fixed storage devices, optical storage devices, wireless channels, and/or various other storage mediums capable of storing that contain or carry instruction(s) and/or data.

In certain embodiments, the controller 126 optionally includes an associated user interface, including but not limited to a graphical user interface, such that the controller 126 may obtain information from a user and/or provide information to the user. In such embodiments, the user interface may be on the controller 126 itself or may be at a location remote from the controller 126 such as, but not limited to, another location within the metal processing system 100. Additionally, or alternatively, the controller 126 optionally may include various communication modules such that the controller 126 may receive and/or send information as desired. Non-limiting examples of communication modules may include systems and mechanisms enabling wired communication and/or wireless communication (e.g., Industrial Ethernet, Profibus^{®}, near field, cellular, Wi-Fi, Bluetooth^{®}, Bluetooth Low Energy (BLE), etc.).

The controller 126 of the control system 122 is communicatively coupled to the sensor 124 such that the controller 126 receives the thermal data from the sensor 124 for the one or more detection zones 132 and/or the one or more detection regions 136. In various embodiments, the controller 126 and/or the sensor 124 may determine the temperature for a particular detection zone 132 and/or detection region 136 using various techniques as desired, including based on a maximum temperature detected within the particular detection zone 132 and/or detection region 136, an average of the temperatures detected within the particular detection zone 132 and/or detection region 136, the temperature at a center of the detection zone 132 and/or detection region 136, and/or as otherwise desired.

The controller 126 may generate various output responses based on the temperature data from the sensor 124. Output responses may include, but are not limited to, generating an alert or notification (e.g., audio or visual) on a user interface of the controller 126, sending an alert or notification to an operator, controlling an operating parameter of the roll 104 (e.g., by sending a control signal to an actuator or control device of the roll 104), and/or controlling an operating parameter of the metal processing system 100 (e.g., by sending a control signal to an actuator or control device of the metal processing system 100). The operating parameter of the roll 104 may include, but is not limited to, a roll force, a tilt of the roll 104, pressure application from an actuator on the roll 104, combinations thereof, and/or various other operating parameters as desired, and control of such operating parameters may include controlling a driving mechanism of the roll 104, actuators of the roll 104 causing the roll 104 to apply the roll force, combinations thereof, and/or as otherwise desired. The operating parameter of the metal processing system may include, but is not limited to, a line speed, a coiling rate, an uncoiling rate, combinations thereof, and/or various other operating parameters as desired, and control of such operating parameters may include controlling a work stand upstream from the coiler 106, a driving mechanism controlling a rate of rotation of the coiler 106, combinations thereof, and/or as otherwise desired.

The output response from the controller 126 may be based on various analysis of the measured temperature from the sensor 124 as desired.

As one non-limiting example, the output response from the controller 126 may be based on a comparison of a measured temperature for a particular detection zone 132 and/or detection region 136 to a threshold temperature for the particular detection zone 132 and/or detection region 136. In such embodiments, the threshold temperature may correspond with a temperature at which the contact surface 116 fails and may be predetermined, calculated, or otherwise generated or provided as desired. In other embodiments, the threshold temperature may be other temperatures as desired and need not be a failure temperature of the contact surface 116. In embodiments with this comparison, the controller 126 may generate the output response based on one of the detection zones 132 having a measured temperature being within a predetermined range and/or exceeding the threshold temperature. As a non-limiting example, the controller 126 may generate the output response of controlling an actuator of the roll 104 to reduce the roll force for the portion of the roll 104 in detection region 136A and reduce a temperature of the roll 104 in detection region 136A based on the detection region 136A having a measured temperature exceeding its threshold temperature. Additionally, or alternatively, the output response may include an alert or alarm that is provided to the operator based on the measured temperature exceeding or being within the range of the threshold temperature.

As another non-limiting example, the output response from the controller 126 may be based on a comparison of the measured temperatures of adjacent detection zones 132 and/or detection regions 136. In such embodiments, the output response may be generated if a change in temperature between adjacent detection zones 132 and/or detection regions 136 is within a predetermined range or exceeds a threshold value. As a non-limiting example, the controller may generate the output response based on a difference between the measured temperature of detection region 132C and detection region 132D exceeding a threshold value. Additionally, or alternatively, the output response may include an alert or alarm that is provided to the operator based on the difference in temperatures exceeding or being within the range of the threshold value.

As yet another non-limiting example, the output response from the controller 126 may be based on the measured temperature of each of the detection regions 136. In such embodiments, the measured temperatures from each detection zone 132 may be used to derive temperature values for each of the detection regions 136. Optionally, a difference between detection region 136A and the detection region 136C may be used to adjust a difference in roll force applied on the first end 112 and the second end 114, e.g. if the temperature is higher in the detection region 136A, the force can be adjusted to reduce force on first end 112 and to increase it on the second end 114. As another non-limiting example, a difference between the detection region 136B (e.g., in a center of the roll 104) and an average of the temperature of the detection regions 136A, 136C (or edge control temperature) may be used to increase or decrease the total ironing roll force, e.g., if the temperature gradient from the center to the edge control temperature exceeds a certain limit, the total ironing roll force may be increased.

As a further non-limiting example, the output response from the controller 126 may be based on a curvature or profile of a temperature signal along the roll 104, which may correspond to a pressure distribution from one or more actuators of the roll 104. In such embodiments, the temperature signal may be the combined measured temperatures along the roll 104, and the controller 126 may compare the temperature signal to a target signal and/or determine oscillations in the temperature signal above a threshold. As a non-limiting example, the controller 126 may control pressure applied by actuators (e.g., pneumatic cylinders) on the roll 104 to improve flatness in the metal substrate 110 based on an identification of a plurality of oscillations in the temperature signal and/or that the temperature signal has a "wavy" profile.

As another non-limiting example, the controller 126 may predict future performance of the roll 104 based on the detected temperatures, and the controller 126 may generate an alert based on the predicted performance meeting a predetermined condition. As a non-limiting example, the controller 126 may predict a remaining useful life of the roll 104 based on historical temperatures of the roll 104 and/or current measured temperatures of the roll 104, and the controller 126 may generate an alert or alarm to the operator based on the remaining useful life of the roll 104 being less than a predetermined minimum remaining life for the roll 104.

Various other analysis may be performed by the controller 126 as desired, and the aforementioned examples should not be considered limiting.

The output response from the controller 126 based on the measured temperature of the contact surface 116 may provide improved control of the roll 104, which may provide benefits including but not limited to minimizing or preventing failure of the contact surface 116 during metal processing and/or providing the metal substrate 110 with improved flatness.

Referring to FIG. 1, a method of controlling the roll 104 with the contact surface 116 may include receiving, by the controller 126, a detected temperature of at least a portion of the contact surface 116 of the roll 104 from the sensor 124. The method includes generating, by the controller 126, an output response based on the received temperature. In some embodiments, generating the output response includes one or more of controlling an operating parameter of the roll 104, controlling an operating parameter of the metal processing system, or generating an alert or alarm to an operator.

In some embodiments, controlling the roll includes adjusting an operating parameter of the roll based on the received temperature exceeding a threshold temperature. Optionally, controlling the roll may include controlling at least one actuator of the roll for controlling a roll force from the roll.

In various embodiments, receiving the detected temperature from the sensor 124 includes independently receiving a detected temperature for each detection zone 132 of the plurality of detection zones 132 along the roll 104. Optionally, controlling the roll 104 is based on at least one of the detected temperature for a particular detection zone 132 exceeding a threshold temperature for that particular detection zone 132 or a difference between the detected temperature of a first detection zone (e.g., detection zone 132A) of the plurality of detection zones 132 and the detected temperature of a second detection zone (e.g., detection zone 132B or 132F) of the plurality of detection zones 132 exceeding a threshold limit.

In some embodiments, the method includes determining a pressure distribution of at least one actuator on the roll based on a temperature signal formed by the detected temperatures. In some embodiments, generating the output response may include controlling the at least one actuator of the roll 104 based on the determined pressure distribution.

Optionally, the method may include predicting performance of the roll based on the detected temperature and generating an alert based on the predicted performance meeting a predetermined condition. Optionally, generating the alert includes generating a visual alert or an auditory alert to the operator.

Various other processes may be performed using the control system 122, and the aforementioned control process should not be considered limiting.

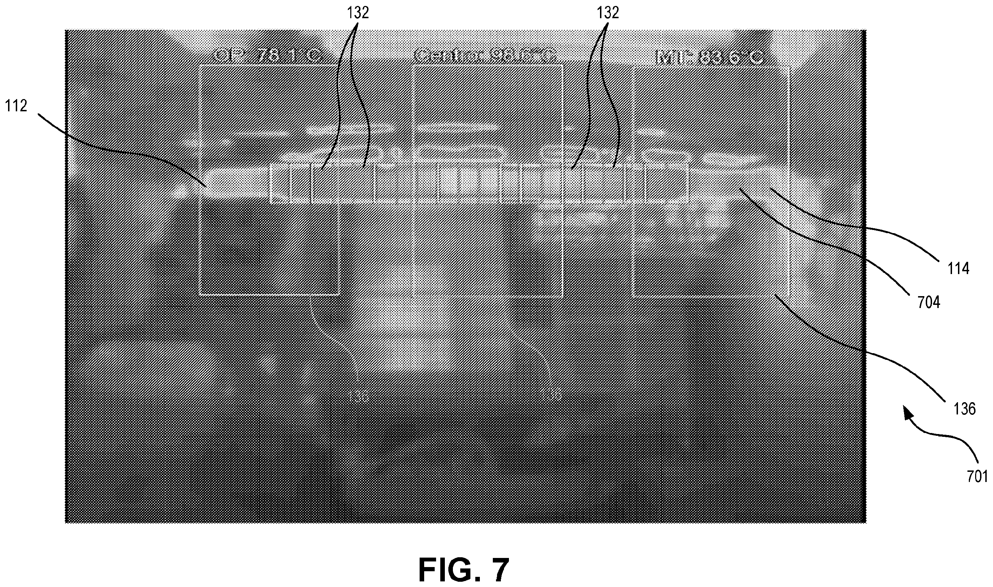

FIG. 7 illustrates an example of a thermal image 701 of a roll 704 from a control system similar to the control system 122. Compared to FIG. 4, the thermal image 701 includes twenty detection zones 132 and three detection regions 136.

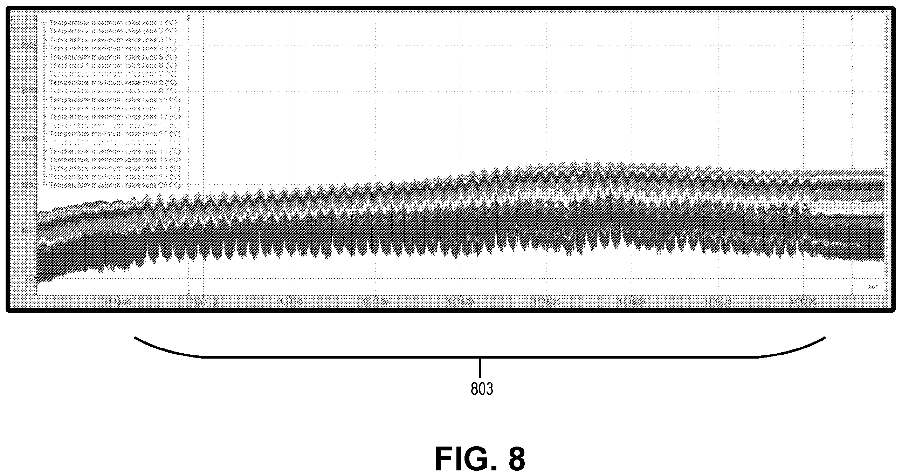

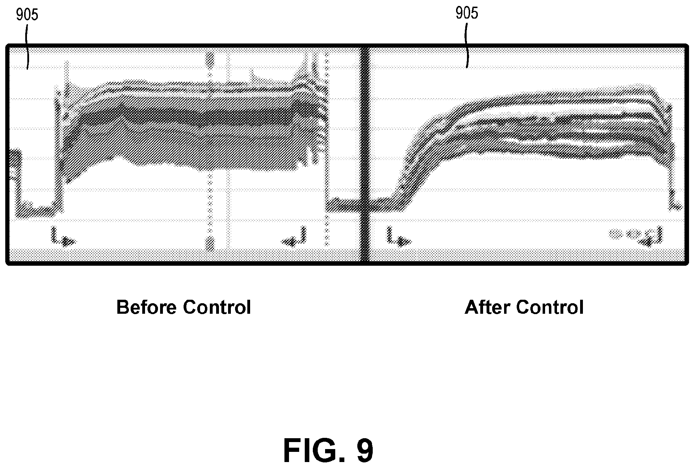

FIG. 8 illustrates a plurality of temperature signals of a plurality of rolls similar to the roll 104 obtained using a control system similar to the control system 122. As illustrated in FIG. 9, each temperature signal has a "wavy" portion (see, e.g., region 803 of the temperature signals), which is caused by wobbling movement of the rolls due to actuators of the roll. The controller 126 may adjust the actuators of the rolls and/or generate various other outputs to minimize such oscillations.

FIG. 9 illustrates a plurality of temperature signals of rolls similar to the roll 104 as measured and temperature signals of the same rolls after the control system 122 controls the rolls based on the measured temperature. As illustrated, before control by the control system 122, portions of certain rolls had temperatures exceeding a threshold temperature 905. In these embodiments, responsive to such detected temperatures, the control system 122 controlled the rolls (e.g., by adjusting actuators, controlling the line speed of the metal substrate, etc.) such that the temperature of the rolls is below the threshold temperature 905.

The subject matter of embodiments is described herein with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described. Directional references such as "up," "down," "top," "bottom," "left," "right," "front," and "back," among others, are intended to refer to the orientation as illustrated and described in the figure (or figures) to which the components and directions are referencing. Throughout this disclosure, a reference numeral with a letter refers to a specific instance of an element and the reference numeral without an accompanying letter refers to the element generically or collectively. Thus, as an example (not shown in the drawings), device "12A" refers to an instance of a device class, which may be referred to collectively as devices "12" and any one of which may be referred to generically as a device "12". In the figures and the description, like numerals are intended to represent like elements. As used herein, the meaning of "a," "an," and "the" includes singular and plural references unless the context clearly dictates otherwise.

The above-described aspects are merely possible examples of implementations, merely set forth for a clear understanding of the principles of the present disclosure. Many variations and modifications may be made to the above-described embodiment(s) without departing from the scope of the appended claims.

## Claims

1. A metal processing system (100) comprising:
a work station (102) comprising:
a coiler (106) configured for selectively forming a coil (108) of a metal substrate (110) or for uncoiling the coil (108); and
a roll (104) configured to rotate about an axis, the roll (104) comprising a first
end (112), a second end (114), wherein the roll (104) is an ironing roll for contacting the coil (108) of the metal substrate (110),
**characterized in that** the roll (104) comprises a non-metal surface (116) between
the first end (112) and the second end (114) for contacting the metal substrate (110), the non-metal surface (116) comprising a deformable material; and **in that** the processing system comprises
a control system (122) comprising:
a sensor (124) configured to detect a temperature of the non-metal surface (116) of the roll (104); and
a controller (126) communicatively coupled with the sensor (124), wherein the controller (126) is configured to receive the detected temperature from the sensor (124) and control the roll (104) based on the detected temperature.

2. The metal processing system (100) of claim 1, wherein the sensor (124) comprises a thermal camera, and wherein the thermal camera is configured to detect the temperature at a frame rate of at least 60 Hz.

3. The metal processing system (100) of any one of claims 1-2, wherein the sensor (124) is configured to detect the temperature of the non-metal surface (116) of the roll (104) by:
generating a plurality of independent detection zones (132) along the roll (104) between the first end (112) and the second end (114); and
independently detecting a temperature of the non-metal surface (116) in each detection zone (132) of the plurality of detection zones (132).

4. The metal processing system (100) of claim 3, wherein the controller (126) is configured to:
receive the detected temperature of each detection zone (132) of the plurality of detection zones (132);
for each detection zone (132), compare the detected temperature to a threshold temperature for the particular detection zone (132); and
control the roll (104) based on the detected temperature for at least one detection zone (132) of the plurality of detection zones (132) exceeding the threshold temperature for that particular detection zone (132).

5. The metal processing system (100) of claim 3, wherein the controller (126) is configured to:
receive the detected temperature of each detection zone (132) of the plurality of detection zones (132);
compare a detected temperature of a first detection zone (132) of the plurality of detection zones (132) with a detected temperature of a second detection zone (132) of the plurality of detection zones (132); and
control the roll (104) based on a difference between the detected temperature of the first detection zone (132) and the detected temperature of the second detection zone (132).

6. The metal processing system (100) of any one of claims 3-5, wherein the sensor (124) is configured to change a size of each detection zone (132) based on a change in distance between the roll (104) and the sensor (124).

7. The metal processing system (100) of claim 5, wherein the controller (126) is configured to control the roll (104) based on the difference between the detected temperature of the first detection zone (132) and the detected temperature of the second detection zone (132) exceeding a threshold limit.

8. The metal processing system (100) of any one of claims 1-7, wherein the controller (126) is further configured to determine a pressure distribution of at least one actuator on the roll (104) based on the detected temperature and control the at least one actuator based on the determined pressure distribution.

9. The metal processing system (100) of any one of claims 1-8, wherein the controller (126) is further configured to predict a remaining useful life of the roll (104) based on historical temperatures of the roll (104) and/or current measured temperatures of the roll (104), and to generate an alert or alarm to an operator based on the remaining useful life of the roll (104) being less than a predetermined minimum remaining life for the roll (104).

10. A method of controlling a roll (104) comprising a non-metal contact surface (116) for contacting a metal substrate, wherein the roll (104) is an ironing roll for contacting a coil (108) of the metal substrate (110), wherein the contact surface (116) contacts the coil (108), and the non-metal surface (116) comprises a deformable material, the method comprising:
receiving, by means of a controller (126), a detected temperature of at least a portion of the non-metal contact surface (116) of the roll (104) from a sensor (124); and
controlling the roll (104), by means of the controller (126), based on the received temperature.

11. The method of claim 10, wherein receiving the detected temperature comprises independently receiving a detected temperature for each detection zone (132) of a plurality of detection zones (132) along the roll (104), and wherein controlling the roll (104) is based on at least one of:
the detected temperature for a particular detection zone (132) exceeding a threshold temperature for that particular detection zone (132); or
a difference between the detected temperature of a first detection zone (132) of the plurality of detection zones (132) and the detected temperature of a second detection zone (132) of the plurality of detection zones (132) exceeding a threshold limit.

12. The method of claim 10 or 11, wherein controlling the roll (104) comprises controlling at least one actuator of the roll (104) for controlling a roll force from the roll (104).

13. The method of any one of claims 10-12, further comprising determining a pressure distribution of at least one actuator on the roll (104) based on the detected temperature and controlling the at least one actuator based on the determined pressure distribution.

14. The method of any one of claims 10-13, further comprising predicting a remaining useful life of the roll (104) based on historical temperatures of the roll (104) and/or current measured temperatures of the roll (104), and to generate an alert or alarm to an operator based on the remaining useful life of the roll (104) being less than a predetermined minimum remaining life for the roll (104).

## Patentansprüche

1. Metallverarbeitungssystem (100), umfassend:
eine Arbeitsstation (102), umfassend:
einen Wickler (106), welcher dazu eingerichtet ist, einen Coil (108) eines Metallsubstrats (110) selektiv zu bilden oder den Coil (108) abzuwickeln; und
eine Walze (104), welche dazu eingerichtet ist, um eine Achse zu rotieren, wobei die Walze (104) ein erstes Ende (112) und ein zweites Ende (114) aufweist, wobei die Walze (104) eine Andrückwalze zum Kontaktieren des Coils (108) des Metallsubstrats (110) ist,
**dadurch gekennzeichnet, dass** die Walze (104) zwischen dem ersten Ende (112) und dem zweiten Ende (114) eine Nichtmetall-Oberfläche (116) zum Kontaktieren des Metallsubstrats (110) umfasst, wobei die Nichtmetall-Oberfläche (116) ein verformbares Material umfasst;
und dass das Verarbeitungssystem ein Steuer-/Regelsystem (122) umfasst, umfassend:
einen Sensor (124), welcher dazu eingerichtet ist, eine Temperatur der Nichtmetall-Oberfläche (116) der Walze (104) zu detektieren; und
eine Steuer-/Regeleinheit (126), welche kommunikativ mit dem Sensor (124) gekoppelt ist, wobei die Steuer-/Regeleinheit (126) dazu eingerichtet ist, die detektierte Temperatur von dem Sensor (124) zu empfangen und die Walze (104) basierend auf der detektierten Temperatur zu steuern/regeln.

2. Metallverarbeitungssystem (100) nach Anspruch 1, wobei der Sensor (124) eine Wärmebildkamera umfasst, und wobei die Wärmebildkamera dazu eingerichtet ist, die Temperatur mit einer Bildrate von wenigstens 60 Hz zu detektieren.

3. Metallverarbeitungssystem (100) nach einem der Ansprüche 1-2, wobei der Sensor (124) dazu eingerichtet ist, die Temperatur der Nichtmetall-Oberfläche (116) der Walze (104) zu detektieren durch:
Erzeugen einer Mehrzahl von unabhängigen Detektionszonen (132) entlang der Walze (104) zwischen dem ersten Ende (112) und dem zweiten Ende (114); und
unabhängiges Detektieren einer Temperatur der Nichtmetall-Oberfläche (116) in jeder Detektionszone (132) der Mehrzahl von Detektionszonen (132).

4. Metallverarbeitungssystem (100) nach Anspruch 3, wobei die Steuer-/Regeleinheit (126) dazu eingerichtet ist:
die detektierte Temperatur jeder Detektionszone (132) der Mehrzahl von Detektionszonen (132) zu empfangen;
für jede Detektionszone (132) die detektierte Temperatur mit einer Schwellenwerttemperatur für die jeweilige Detektionszone (132) zu vergleichen; und
die Walze (104) basierend darauf zu steuern/regeln, dass die detektierte Temperatur für wenigstens eine Detektionszone (132) der Mehrzahl von Detektionszonen (132) die Schwellenwerttemperatur für diese jeweilige Detektionszone (132) überschreitet.

5. Metallverarbeitungssystem (100) nach Anspruch 3, wobei die Steuer-/Regeleinheit (126) dazu eingerichtet ist:
die detektierte Temperatur jeder Detektionszone (132) der Mehrzahl von Detektionszonen (132) zu empfangen;
eine detektierte Temperatur einer ersten Detektionszone (132) der Mehrzahl von Detektionszonen (132) mit einer detektierten Temperatur einer zweiten Detektionszone (132) der Mehrzahl von Detektionszonen (132) zu vergleichen; und
die Walze (104) basierend auf einem Unterschied zwischen der detektierten Temperatur der ersten Detektionszone (132) und der detektierten Temperatur der zweiten Detektionszone (132) zu steuern/regeln.

6. Metallverarbeitungssystem (100) nach einem der Ansprüche 3-5, wobei der Sensor (124) dazu eingerichtet ist, eine Größe jeder Detektionszone (132) basierend auf einer Änderung eines Abstands zwischen der Walze (104) und dem Sensor (124) zu ändern.

7. Metallverarbeitungssystem (100) nach Anspruch 5, wobei die Steuer-/Regeleinheit (126) dazu eingerichtet ist, die Walze (104) basierend darauf zu steuern, dass der Unterschied zwischen der detektierten Temperatur der ersten Detektionszone (132) und der detektierten Temperatur der zweiten Detektionszone (132) eine Schwellenwertgrenze überschreitet.

8. Metallverarbeitungssystem (100) nach einem der Ansprüche 1-7, wobei die Steuer-/Regeleinheit (126) ferner dazu eingerichtet ist, eine Druckverteilung wenigstens eines Aktuators an der Walze (104) basierend auf der detektierten Temperatur zu bestimmen und den wenigstens einen Aktuator basierend auf der bestimmten Druckverteilung zu steuern/regeln.

9. Metallverarbeitungssystem (100) nach einem der Ansprüche 1-8, wobei die Steuer-/Regeleinheit (126) ferner dazu eingerichtet ist, eine verbleibende Nutzungsdauer der Walze (104) basierend auf historischen Temperaturen der Walze (104) und/oder aktuell gemessenen Temperaturen der Walze (104) vorherzusagen und eine Warnung oder einen Alarm an einen Bediener basierend darauf zu erzeugen, dass die verbleibende Nutzungsdauer der Walze (104) geringer ist als eine vorbestimmte minimale verbleibende Lebensdauer für die Walze (104).

10. Verfahren zum Steuern/Regeln einer Walze (104), welche eine Nichtmetall-Kontaktoberfläche (116) zum Kontaktieren eines Metallsubstrats umfasst, wobei die Walze (104) eine Andrückwalze zum Kontaktieren eines Coils (108) des Metallsubstrats (110) ist, wobei die Kontaktoberfläche (116) den Coil (108) kontaktiert und die Nichtmetall-Oberfläche (116) ein verformbares Material umfasst, wobei das Verfahren umfasst:
Empfangen, mittels einer Steuer-/Regeleinheit (126), einer detektierten Temperatur wenigstens eines Abschnitts der Nichtmetall-Kontaktoberfläche (116) der Walze (104) von einem Sensor (124); und
Steuern/Regeln der Walze (104), mittels der Steuer-/Regeleinheit (126), basierend auf der empfangenen Temperatur.

11. Verfahren nach Anspruch 10, wobei Empfangen der detektierten Temperatur unabhängiges Empfangen einer detektierten Temperatur für jede Detektionszone (132) einer Mehrzahl von Detektionszonen (132) entlang der Walze (104) umfasst, und wobei das Steuern/Regeln der Walze (104) auf wenigstens Einem basiert aus:
dass die detektierte Temperatur für eine jeweilige Detektionszone (132) eine Schwellenwerttemperatur für diese jeweilige Detektionszone (132) überschreitet; oder
dass ein Unterschied zwischen der detektierten Temperatur einer ersten Detektionszone (132) der Mehrzahl von Detektionszonen (132) und der detektierten Temperatur einer zweiten Detektionszone (132) der Mehrzahl von Detektionszonen (132) eine Schwellenwertgrenze überschreitet.

12. Verfahren nach Anspruch 10 oder 11, wobei Steuern/Regeln der Walze (104) Steuern/Regeln wenigstens eines Aktuators der Walze (104) zum Steuern/Regeln einer Walzkraft der Walze (104) umfasst.

13. Verfahren nach einem der Ansprüche 10-12, ferner umfassend Bestimmen einer Druckverteilung wenigstens eines Aktuators an der Walze (104) basierend auf der detektierten Temperatur und Steuern/Regeln des wenigstens einen Aktuators basierend auf der bestimmten Druckverteilung.

14. Verfahren nach einem der Ansprüche 10-13, ferner umfassend Vorhersagen einer verbleibenden Nutzungsdauer der Walze (104) basierend auf historischen Temperaturen der Walze (104) und/oder aktuell gemessenen Temperaturen der Walze (104) und Erzeugen einer Warnung oder eines Alarms an einen Bediener basierend darauf, dass die verbleibende Nutzungsdauer der Walze (104) geringer ist als eine vorbestimmte minimale verbleibende Lebensdauer für die Walze (104).

## Revendications

1. Système de traitement de métal (100) comprenant :
un poste de travail (102) comprenant :
une bobineuse (106) configurée pour former sélectivement une bobine (108) d'un substrat métallique (110) ou pour débobiner la bobine (108) ; et
un cylindre (104) configuré pour tourner autour d'un axe, le cylindre (104) comprenant une première extrémité (112), une seconde extrémité (114), dans lequel le cylindre (104) est un cylindre d'étirage pour entrer en contact avec la bobine (108) du substrat métallique (110),
**caractérisé en ce que** le cylindre (104) comprend une surface non métallique (116) entre la première extrémité (112) et la seconde extrémité (114) pour entrer en contact avec le substrat métallique (110), la surface non métallique (116) comprenant un matériau déformable ; et **en ce que** le système de traitement comprend
un système de commande (122) comprenant :
un capteur (124) configuré pour détecter une température de la surface non métallique (116) du cylindre (104) ; et
un dispositif de commande (126) couplé en communication avec le capteur (124), dans lequel le dispositif de commande (126) est configuré pour recevoir la température détectée du capteur (124) et pour commander le cylindre (104) sur la base de la température détectée.

2. Système de traitement de métal (100) selon la revendication 1, dans lequel le capteur (124) comprend une caméra thermique, et dans lequel la caméra thermique est configurée pour détecter la température à une fréquence d'images d'au moins 60 Hz.

3. Système de traitement de métal (100) selon l'une quelconque des revendications 1-2, dans lequel le capteur (124) est configuré pour détecter la température de la surface non métallique (116) du cylindre (104) en :
générant une pluralité de zones de détection (132) indépendantes le long du cylindre (104) entre la première extrémité (112) et la seconde extrémité (114) ; et
détectant indépendamment une température de la surface non métallique (116) dans chaque zone de détection (132) de la pluralité de zones de détection (132).

4. Système de traitement de métal (100) selon la revendication 3, dans lequel le dispositif de commande (126) est configuré pour :
recevoir la température détectée de chaque zone de détection (132) de la pluralité de zones de détection (132) ;
pour chaque zone de détection (132), comparer la température détectée à une température de seuil pour la zone de détection (132) particulière ; et
commander le cylindre (104) sur la base de la température détectée pour au moins une zone de détection (132) de la pluralité de zones de détection (132) dépassant la température de seuil pour cette zone de détection (132) particulière.

5. Système de traitement de métal (100) selon la revendication 3, dans lequel le dispositif de commande (126) est configuré pour :
recevoir la température détectée de chaque zone de détection (132) de la pluralité de zones de détection (132) ;
comparer une température détectée d'une première zone de détection (132) de la pluralité de zones de détection (132) avec une température détectée d'une seconde zone de détection (132) de la pluralité de zones de détection (132) ; et
commander le cylindre (104) sur la base d'une différence entre la température détectée de la première zone de détection (132) et la température détectée de la seconde zone de détection (132).

6. Système de traitement de métal (100) selon l'une quelconque des revendications 3-5, dans lequel le capteur (124) est configuré pour changer une taille de chaque zone de détection (132) sur la base d'un changement de distance entre le cylindre (104) et le capteur (124).

7. Système de traitement de métal (100) selon la revendication 5, dans lequel le dispositif de commande (126) est configuré pour commander le cylindre (104) sur la base de la différence entre la température détectée de la première zone de détection (132) et la température détectée de la seconde zone de détection (132) dépassant une limite de seuil.

8. Système de traitement de métal (100) selon l'une quelconque des revendications 1-7, dans lequel le dispositif de commande (126) est en outre configuré pour déterminer une distribution de pression d'au moins un actionneur sur le cylindre (104) sur la base de la température détectée et pour commander l'au moins un actionneur sur la base de la distribution de pression déterminée.

9. Système de traitement de métal (100) selon l'une quelconque des revendications 1-8, dans lequel le dispositif de commande (126) est en outre configuré pour prédire une durée de vie utile restante du cylindre (104) sur la base de températures historiques du cylindre (104) et/ou de températures mesurées actuelles du cylindre (104), et pour générer une alerte ou une alarme à destination d'un opérateur sur la base du fait que la durée de vie utile restante du cylindre (104) est inférieure à une durée de vie restante minimale prédéterminée pour le cylindre (104).

10. Procédé de commande d'un cylindre (104) comprenant une surface de contact non métallique (116) pour entrer en contact avec un substrat métallique, dans lequel le cylindre (104) est un cylindre d'étirage pour entrer en contact avec une bobine (108) du substrat métallique (110), dans lequel la surface de contact (116) entre en contact avec la bobine (108), et la surface non métallique (116) comprend un matériau déformable, le procédé comprenant :
la réception, au moyen d'un dispositif de commande (126), d'une température détectée d'au moins une partie de la surface de contact non métallique (116) du cylindre (104) depuis un capteur (124) ; et
la commande du cylindre (104), au moyen du dispositif de commande (126), sur la base de la température reçue.

11. Procédé selon la revendication 10, dans lequel la réception de la température détectée comprend la réception indépendante d'une température détectée pour chaque zone de détection (132) d'une pluralité de zones de détection (132) le long du cylindre (104), et dans lequel la commande du cylindre (104) est basée sur au moins un parmi :
la température détectée pour une zone de détection (132) particulière dépassant une température de seuil pour cette zone de détection (132) particulière ; ou
une différence entre la température détectée d'une première zone de détection (132) de la pluralité de zones de détection (132) et la température détectée d'une seconde zone de détection (132) de la pluralité de zones de détection (132) dépassant une limite de seuil.

12. Procédé selon la revendication 10 ou 11, dans lequel la commande du cylindre (104) comprend la commande d'au moins un actionneur du cylindre (104) pour commander une force de cylindre depuis le cylindre (104).

13. Procédé selon l'une quelconque des revendications 10-12, comprenant en outre la détermination d'une distribution de pression d'au moins un actionneur sur le cylindre (104) sur la base de la température détectée et la commande de l'au moins un actionneur sur la base de la distribution de pression déterminée.

14. Procédé selon l'une quelconque des revendications 10-13, comprenant en outre la prédiction d'une durée de vie utile restante du cylindre (104) sur la base de températures historiques du cylindre (104) et/ou de températures mesurées actuelles du cylindre (104), et pour générer une alerte ou alarme à destination d'un opérateur sur la base du fait que la durée de vie utile restante du cylindre (104) est inférieure à une durée de vie restante minimale prédéterminée pour le cylindre (104).
